Europäisches Patentamt

European Patent Office

Office européen des brevets

(11) Veröffentlichungsnummer: **0 491 224 A2**

## (12) EUROPÄISCHE PATENTANMELDUNG

(21) Anmeldenummer: **91120738.9**

(22) Anmeldetag: **03.12.91**

(51) Int. Cl.⁵: **G11B 7/24**

(30) Priorität: **15.12.90 DE 4040163**

(43) Veröffentlichungstag der Anmeldung:
**24.06.92 Patentblatt 92/26**

(84) Benannte Vertragsstaaten:
**DE FR GB IT NL**

(71) Anmelder: **BASF Aktiengesellschaft
Carl-Bosch-Strasse 38
W-6700 Ludwigshafen(DE)**

(72) Erfinder: **Iselborn, Stefan, Dr.
Friedrichstrasse 164
W-6700 Ludwigshafen(DE)**
Erfinder: **Hibst, Hartmut, Dr.
Branichstrasse 23
W-6905 Schriesheim(DE)**

(54) **Reversibler optischer Aufzeichnungsträger vom Phasenwechsel-Typ.**

㊾ Reversibler optischer Aufzeichnungsträger mit mindestens einem Substrat, mindestens einer Speicherschicht vom Phasenwechsel-Typ und mindestens einer metallischen Reflexionsschicht, wobei auf der der Speicherschicht abgewandten Seite der Reflexionsschicht eine dünne Chromschicht aufgebracht ist.

EP 0 491 224 A2

Die Erfindung betrifft einen optischen Aufzeichnungsträger mit mindestens einem Substrat, mindestens einer Speicherschicht vom Phasenwechsel-Typ und mindestens einer Reflexionsschicht, bei dem durch Einstrahlung von Laserlicht Informationen wiederholt aufgezeichnet, gelöscht und gelesen werden können. Die Erfindung betrifft insbesondere solche Aufzeichnungsträger, bei denen auf der der Speicherschicht abgewandten Seite der Reflexionsschicht eine weitere Metallschicht angeordnet ist.

Seit mehreren Jahren werden sogenannte Phasenwechselmaterialien (im folgenden auch Speichermaterialien genannt) für die reversible optische Informationsaufzeichnung eingesetzt. Beispiele hierzu sind Tellur, Selen, Chalkogenid-Legierungen auf Tellur- oder Selenbasis oder III-V-Halbleitermaterialien, die unter Einwirkung intensiver Strahlung, z.B. Laserlicht, reversibel vom amorphen in den kristallinen Zustand geschaltet werden können. Bei der Aufzeichnung wird die Information durch entsprechende Bestrahlung des Speichermaterials in amorphe und kristalline Bereiche der Speicherschicht umgesetzt. Amorphe und kristalline Bereiche haben hierbei ein unterschiedliches optisches Verhalten, das durch physikalische Größen wie das optische Reflexionsvermögen, die optische Transmission bzw. Absorption, den Brechungsindex oder die Dielektrizitätskonstante charakterisiert werden kann. Unterschiedliches Verhalten zeigt sich auch hinsichtlich der elektrischen Eigenschaften wie z.B. dem spezifischen Widerstand.

Im allgemeinen wird zum Lesen der aufgezeichneten Informationen das unterschiedliche Reflexionsvermögen amorpher und kristalliner Bereiche für Laserstrahlung verwendet. Gelegentlich wird die unterschiedliche optische Transmission zum Lesen ausgenutzt.

Für das Lesen der Informationen wird Laserlicht geringerer Intensität als für das Schreiben verwendet, so daß das aufgezeichnete Muster von amorphen und kristallinen Bereichen beim Lesen nicht verändert wird.

Beispiele für optische Aufzeichnungsträger, bei denen die beiden Zustände, zwischen denen geschaltet wird, in der amorphen bzw. in der kristallinen Phase vorliegen, sind in EP-A 212 336; US-A 3,530,441; US-A 3,971,874 und US-A 4,278,734 zu finden.

Das nach der Herstellung in der Regel in amorpher Form vorliegende Speichermaterial wird entsprechend EP-A 180 103 zunächst einem Energiepuls ausgesetzt, um es in den kristallinen Zustand zu versetzen. Dazu wird häufig eine Bestrahlung des Speichermaterials mit Laserlicht durchgeführt. Der Prozeß wird als Formierung oder Initialisierung bezeichnet.

In der Regel werden beim Schreibprozeß kristalline Bereiche der Speicherschicht durch Laserstrahlung hoher Intensität über ihren Schmelzpunkt erwärmt, der bei den üblicherweise verwendeten Speichermaterialien mehrere hundert Grad Celsius betragen kann. Sobald der Laserstrahl die bestrahlte Stelle verlassen hat, erfolgt eine rasche Abkühlung. Als Resultat dieser Vorgänge hat sich der kristalline Bereich in einen amorphen Bereich umgewandelt. Beim Löschprozeß werden die amorphen Bereiche durch Laserstrahlung geringer Intensität bis zur Kristallisationstemperatur erwärmt, die niedriger als die Schmelztemperatur ist, und somit in kristalline Bereiche zurückverwandelt. Gelegentlich wird auch umgekehrt durch Kristallisieren geschrieben und durch Amorphisieren gelöscht.

Für das Auslesen der Information ist es wesentlich, daß ein hoher Reflexionsunterschied zwischen amorphen und kristallinen Bereichen vorhanden ist. Hohe Reflexionsunterschiede führen zu hohen Signalen und zu hohen Signal/Rausch-Verhältnissen. Es ist bekannt, daß der Reflexionsunterschied durch die Wahl der Dicke d der Speicherschicht wesentlich bestimmt wird. Beispielsweise muß d ungefähr 100 nm sein, um bei GaSb-Speicherschichten den größtmöglichen Reflexionsunterschied zu erreichen (D. J. Gravesteijn et al., Applied Optics, Vol. 26 (1987) 4772).

Das ausgelesene Signal kann verstärkt werden, wenn die Speichermedien mit zusätzlichen Deckschichten versehen werden, die den Kontrast steigern. Es ist dem Fachmann wohlbekannt, wie mit Hilfe der sogenannten Matrixtheorie die beste Schichtdickenabstimmung ausgehend von den optischen Konstanten der verwendeten Schichten ausgerechnet werden kann. Beispielsweise haben Y. Maeda et al. (Applied Physics Letters, Vol. 54, (1989) 893) eine sogenannte 4-Schichten-Struktur benutzt. Diese besteht aus zwei transparenten AlN-Schichten, zwischen die die Speicherschicht eingebettet ist. Als vierte Schicht wird eine hochreflektierende Au-Schicht verwendet, die auf der dem Substrat abgewandten Seite der Speicherschicht aufgebracht ist. Au reflektiert etwa 99 % des typischerweise benutzten Laserlichts mit Wellenlängen von ca. 800 nm. Eine gute Alternative ist Al mit einem Reflexionsvermögen von ca. 80 %.

Einfacher sind 3-Schichten-Strukturen (siehe z. B. R. Barton et al., Applied Physics Letters, Vol. 48 (1986) 1255), bei denen auf die metallische Reflektorschicht verzichtet wird. 3-Schichten-Strukturen werden in der Regel im Falle von Speicherschichten eingesetzt, die das eingestrahlte Licht im wesentlichen absorbieren, 4-Schichten-Strukturen werden dagegen eingesetzt, wenn die Speicherschicht, z. B. bei geringer Dicke der Speicherschicht oder kleinem Absorptionskoeffizienten, einen wesentlichen Anteil des Lichts transmittiert.

Die früher in DE-C 2 845 590 beschriebenen Schichtenfolgen erscheinen nicht mehr attraktiv, da mit ihnen eine Beleuchtung durch das Substrat hindurch nicht möglich ist.

Nach der DE-A 3 118 058 wird eine Deckschicht auf der dem Substrat abgewandten Seite der Speicherschicht auch gebraucht, um zu verhindern, daß das Speichermedium bei der Bestrahlung mit Laserlicht nicht irreversibel verändert wird. Beim Erwärmen der Speicherschicht über den Schmelzpunkt entstehen nämlich Defekte, die das Reflexionsvermögen ähnlich verändern können wie der Phasenwechsel.

Nach R. Barton et al. (Applied Physics Letters, Vol. 48 (1986) 1255) wird auch zwischen Substrat und Speicherschicht eine Zwischenschicht aus transparentem Material angeordnet. Diese Zwischenschicht dient als thermische Isolationsbarriere und reduziert gemeinsam mit der vorher genannten Deckschicht die Bildung von Defekten.

Die Zwischenschicht kann in ihrer Schichtdicke so gewählt werden, daß das Reflexionsvermögen des Mediums insgesamt abgesenkt wird und dadurch das Medium beim Schreibprozeß empfindlicher wird. Diese Art der Schichtdickenwahl wird in vielen Bereichen der Technik benutzt (z. B. Fotovoltaik, Brillenbeschichtung usw.) und "Antireflexbeschichtung" genannt.

Wesentlich für die Eignung der Deckschichten zur Ablationsunterdrückung sind ihre mechanischen Eigenschaften. Neben den bereits genannten sind bisher zahlreiche weitere Materialien beschrieben worden, z. B. $SiO_x$ oder ZnS (R. Barton et al., Applied Physics Letters, Vol. 48 (1986) 1255), $SiO_2$ oder $ZrO_2$ (T. Nishida et al., Applied Physics Letters, Vol. 50 (1987) 667), Polyimid oder Epoxyharze (M. Terao, Japanese Journal of Applied Physics, Vol. 28 (1989) 804) u.a.

Aus der EP-A 265 204 ist bekannt, daß Deckschichten aus einer Mischung von ineinander unlöslichen Materialien besonders vorteilhaft hinsichtlich der erreichbaren Zyklenzahl sind, wobei als typisches Beispiel eine Mischung von feinen ZnS-Kristalliten und nichtkristallinem $SiO_2$ verwendet werden soll. Als günstig erwiesen sich Schichtdicken von 100 nm für eine Zwischenschicht und 200 nm für die zweite Deckschicht.

Nachteilig ist nun jedoch, daß die beschriebene Schutzwirkung wesentlich nachläßt, wenn die Deckschichten mit Dicken unter 100 nm hergestellt werden. Derart dünne Deckschichten könnten schneller und damit kostengünstiger hergestellt werden. Außerdem müssen bei 4-Schichten-Strukturen die Deckschichten sehr dünn (typischerweise unter 40 nm) oder extrem dick (≧ 200 nm) sein, damit weiterhin hohe Reflexionsunterschiede - wie oben beschrieben - möglich sind. Werden so dünne Deckschichten zwischen Speicherschicht und Reflektorschicht eingesetzt, so entstehen bei der Verwendung von dünnen Reflektorschichten Defekte in der Reflektorschicht oder bei der Verwendung von dicken Reflektorschichten werden die Speichermedien zu unempfindlich.

Der Empfindlichkeitsverlust rührt von der hohen Wärmeleitfähigkeit der üblicherweise benutzten Reflektorschichten her. Es ist für Metalle bekannt, daß die angestrebte Eigenschaft des hohen Reflexionsvermögens und die unerwünschte Eigenschaft der hohen Wärmeleitfähigkeit aus physikalischen Gründen nicht voneinander getrennt realisiert werden können. Deshalb konnten entweder nur hochreflektierende Schichten mit geringer Empfindlichkeit (Au-Schichten, siehe oben) oder relativ schwach reflektierende Schichten aus Ni-Cr-Stahl (T. Ohta et al., Proc. SPIE, Vol. 1078 (1989) 27) mit mittlerer Empfindlichkeit als Reflektorschicht eingesetzt werden.

Aus der EP-A 233 034 ist ein optisches Aufzeichnungselement mit einem zweischichtigen Reflektorfilm bekannt. Die der Aufzeichnungsschicht zugewandte erste Schicht des Reflektorfilms besteht aus Al, Cu, Au, Ag oder einem ähnlichen Metall mit genügend großer Lichtreflexion und die zweite Schicht aus Ni, Th, Ta, Pb, Zr, Bi, Te, Se oder einem ähnlichen Metall mit ausreichend niedriger thermischer Leitfähigkeit, oder aber aus der Zweierlegierung AlNi.

In der EP-A 251 286 ist ein wiederbeschreibbares, dreischichtiges optisches Aufzeichnungsmedium vom Phasenwechsel-Typ bekannt, dessen Reflexionsschicht aus einem dünnen Film aus einer Ni-Cr- oder einer Au-Cr-Legierung gebildet ist.

Optische Aufzeichnungsträger mit einer Reflexionsschicht aus einer Aluminiumlegierung sind auch in EP-A 192 256, EP-A 226 168, EP-A 296 888 und EP-A 297 689 beschrieben.

Aus der DE-A 31 27 617 bzw. US-A 4 358 780 geht ein optisches Aufzeichnungsmedium mit einer Aufzeichnungsschicht aus 40 bis 80 At.-% In und 60 bis 20 At.-% Se oder S auf einem Substrat hervor. Zwischen dem Substrat und der Aufzeichnungsschicht kann eine Cr-Schicht, vorzugsweise über 50 Å dick, gebildet werden.

Aus der US-A 4 644 519 bzw. EP-B 128 616 ist ein Aufzeichnungselement mit einer thermisch leitfähigen Schicht auf einer der beiden Seiten der Chalkogenidaufzeichnungsschicht bekannt. Eine thermisch leitfähige Chromschicht ist auf mindestens einer Seite der Aufzeichnungsschicht angeordnet und verhindert dadurch, daß das kontinuierliche Laserlicht merkbare Änderungen in der Aufzeichnungsschicht oder in dem das Substrat bildenden synthetischen Harz verursacht.

In der DE-A 35 08 476 ist ein Lichtaufzeichnungsmaterial mit einer Korrosionsverhinderungsschicht beschrieben, die die Aufzeichnungsschicht berührt. Die Korrosionsverhinderungsschicht besteht aus einem dünnen Metallfilm aus Co, Cr, Ti, Ni, Al, Au und Legierungen davon und läßt den Lichtstrahl fast völlig durch.

In JP-A 61/943 ist ein Herstellungsverfahren für Lichtaufzeichnungsplatten beschrieben, bei dem ein dünner Cr-Film mit einer Dicke zwischen 0,5 und 5 $\mu$m auf mindestens einer Seite der Aufzeichnungsschicht aus $TeO_x$ (O<x<2) gebildet wird.

Aufzeichnungsträger, die Chromschichten enthalten, sind außerdem aus EP-B 132 410, EP-A 99 208, EP-A 316 803, EP-A 356 064, JP-A 62/252551 und JP-A 63/79254 bekannt.

Die bekannten Aufzeichnungsträger haben aber den Nachteil, daß sie durch die zum Auslesen der Information verwendete Laserstrahlung allmählich irreversibel verändert und im Extremfall zerstört werden.

Aufgabe der vorliegenden Erfindung war es daher, reversible optische Aufzeichnungsträger vom Phasenwechsel-Typ herzustellen, die eine deutlich verlängerte Lebensdauer bei der Bestrahlung mit Laserlicht haben.

Die Aufgabe wurde überraschend dadurch gelöst, daß auf der der Speicherschicht abgewandten Seite der metallische Reflexionsschicht eine dünne Chromschicht aufgebracht wird.

Die metallische Reflexionsschicht kann aus den hierfür üblicherweise verwendeten hochreflektierenden Metallen wie Pt, Au, Al gebildet sein. Bevorzugt wird Al eingesetzt.

Wegen der höheren Beständigkeit von Aufzeichnungsträgern mit einer Cr-Schicht kann beispielsweise eine relativ dünne Al- oder Au-Schicht (Schichtdicke: 25 bis 30 nm) und eine darauf aufgebrachte dünne Cr-Schicht (Schichtdicke: ca. 5 nm) die herkömmliche relativ dicke Al- oder Au-Schicht (Schichtdicke: 60 bis 100 nm) ersetzen. Da Cr eine geringere Wärmeleitfähigkeit als beispielsweise Al oder Au hat, wird hierdurch auch die Empfindlichkeit wesentlich gesteigert.

Es wurde gefunden, daß Cr-Schichten von einigen Zehntel nm Dicke bereits die Ablation unterdrücken und Cr-Schichten von 2 bis 20 nm Dicke die beschriebene Verbesserung voll ausbilden. Ferner wurde beobachtet, daß solche Cr-Schichten als Korrosionssperre dienen und damit Deck- und Speicherschicht auch gegen chemische Veränderungen schützen.

Als Phasenwechselmaterialien für die erfindungsgemäßen Aufzeichnungsträger können die hierfür üblichen und bekannten eingesetzt werden. Diese enthalten in der Regel als wesentliche Bestandteile Te, Ge und entweder Sb oder As.

Die Speicherschichten der erfindungsgemäßen Aufzeichnungsträger können bis zu 10 Gew.-% von einer oder mehreren Komponenten enthalten, die hinsichtlich der kristallinen und amorphen Bereiche eine Vergrößerung der Unterschiede in den optischen Eigenschaften bewirken und/oder zu einer Stabilisierung dieser Bereiche beitragen. Diese Komponenten sind bevorzugt so zu wählen, daß ein verbesserter Korrosionsschutz erreicht wird. Alternativ können diese Komponenten nur den Korrosionsschutz verbessern. Beispiele für derartige Komponenten, die bis zu 10 Gew.-% in der Speicherschicht enthalten sein können, sind Selen, Schwefel oder ein Metall wie Chrom.

Die Anwendung der Phasenwechselmaterialien erfolgt bekanntermaßen am besten in der Form dünner Schichten mit Schichtdicken zwischen 25 und 150 mm. Dünne Schichten haben eine geringere Wärmekapazität als kompaktes Material und können deshalb mit relativ geringer Lichtintensität beschrieben werden. Die dünnen Schichten werden in der Regel durch physikalische Abscheideverfahren wie Sputtern oder Aufdampfen usw. auf Substrate aufgebracht.

Beispiele für geeignete Substrate sind Glas, Polycarbonat, Polymethylmethacrylat oder Polyvinylchlorid. Die am häufigsten verwendeten Substrate sind transparent, damit die Speicherschichten durch die Substrate hindurch bestrahlt werden können. Um das Auffinden einer bereits vorhandenen Information zu ermöglichen, können diese geeignet vorbereitet sein.

Typisches Beispiel dafür sind kreis- oder schneckenförmige Spurrillen oder verschiedenartige Sektorinformationen, wie sie beispielsweise in DE-C 30 32 769 beschrieben sind.

Auf wenigstens einer Seite der Speicherschicht kann eine dielektrische Schicht aufgebracht sein. Diese vorzugsweise transparente Schicht kann als Antireflexionsschicht und/oder als Schutzschicht vor Abrieb, Ablation und/oder Korrosion wirken. Schichten dieser Art bestehen bevorzugt aus Carbid, Oxid, Nitrid, Sulfid (ZnS) oder deren Mischungen. Bevorzugte Oxidschichten bestehen aus $SiO_2$. Besonders bevorzugt sind Nitridschichten, z. B. aus AIN, $Si_3N_4$ oder deren Mischungen.

Bevorzugt ist eine dielektrische Schicht zwischen dem transparenten Substrat und der Speicherschicht angeordnet. In einer besonders bevorzugten Ausführungsform sind auf beiden Seiten der Speicherschicht dielektrische Schichten angebracht.

In den erfindungsgemäßen Aufzeichnungsträgern ist zwischen dem aus Speicherschicht und eventuellen dielektrischen Schichten bestehenden Schichtsystem und dem Substrat oder auf der dem Substrat abgekehrten Seite dieses Schichtsystems eine metallische Reflexionsschicht angebracht. Stets ist jedoch die dünne Cr-Schicht auf der der Speicherschicht abgewandten Seite der Reflexionsschicht aufgebracht.

Bei einer besonders bevorzugten Ausführungsform der Erfindung besteht der Aufzeichnungsträger aus einem Schichtsystem, bei dem auf beiden Seiten der Speicherschicht eine transparente dielektrische Schicht angeordnet ist und die metallische Reflexionsschicht auf der dem Substrat abgekehrten Seite des Schichtsystems aufgebracht ist.

In einer besonders bevorzugten Ausführungsform der Erfindung besteht die Speicherschicht aus $GeSb_2Te_4$, die dielektrischen Schichten aus AlN und die Reflexionsschicht aus Al.

Die erfindungsgemäßen Aufzeichnungsträger enthalten mindestens eine Speicherschicht, mindestens ein Substrat und mindestens eine Doppelschicht aus einer Reflexionsschicht und einer Chromschicht. Die Aufzeichnungsträger mit mehr als einer Speicherschicht, mehr als einem Substrat und mehr als einer Doppelschicht können beispielsweise dadurch erhalten werden, daß zwei Aufzeichnungsträger, die aus einem Substrat, einer Speicherschicht, eventuellen dielektrischen Schichten und einer Doppelschicht bestehen, geeignet miteinander verbunden werden. Hierzu können die beiden Aufzeichnungsträger beispielsweise so verklebt werden, daß sich die beiden Speicherschichten gegenüberliegen.

Für die Erzeugung der einzelnen Schichten haben sich generell Sputterverfahren bewährt, weil diese eine gute Reproduzierbarkeit der Materialzusammensetzung und der Schichtdicke garantieren. Eine weitere geeignete Abscheidemethode ist das Aufdampfen.

Das erfindungsgemäße Speichermaterial, das nach der Herstellung in der Regel in amorpher Form vorliegt, muß zunächst initialisiert werden, wobei sich ein oder mehrere Laserpulse mit mindestens 10mal längerer Pulsdauer als beim Schreiben oder Löschen bewährt haben. Durch die Initialisierung wird das Speichermaterial in der Regel in den kristallinen Zustand gebracht.

Beispiele

Die Aufzeichnungsträger wurden durch Sputtern in einer Sputteranlage erzeugt. Dazu wurde der Rezipient zunächst auf mindestens $10^{-6}$ mbar abgepumpt und anschließend Ar-Gas eingelassen. Der Sputtergasdruck lag jeweils bei $5 \times 10^{-3}$ mbar bis $1 \times 10^{-2}$ mbar.

Es wurden nacheinander die Schichten durch Sputtern von unterschiedlichen Targets in der gleichen Anlage ohne Unterbrechung des Vakuums aufgebracht. Zur Herstellung von AlN wurde $N_2$ zusätzlich zu Ar eingelassen. Der $N_2$-Druck wurde so gewählt, daß transparente Schichten entstanden, der Gesamtgasdruck blieb konstant auf $5 \times 10^{-3}$ mbar bis $1 \times 10^{-3}$ mbar. Als Substrate wurden Glasplättchen mit einer Dicke von 1 - 2 mm benutzt. Zur Abkürzung der Schreibweise wird die Reihenfolge und Schichtdicke wie folgt angegeben:

$GeSb_2Te_4$ (100)/AlN(30)/Al(30) bedeutet, daß auf das Substrat zuerst eine 100 nm dicke $GeSb_2Te_4$-Schicht abgeschieden wurde, danach eine 30 nm dicke AlN-Schicht und hierauf zuletzt eine 30 nm dicke Al-Schicht.

Die Schichten wurden mit Laserpulsen unterschiedlicher Pulsleistung und -dauer durch das Substrat hindurch konvergent bestrahlt. Die verwendete Laserfleckgröße betrug ca. 1 $\mu$m, die Laserwellenlänge 780 nm. Vor und nach der Bestrahlung wurde das Reflexionsvermögen gemessen. Die Änderung des Reflexionsvermögens diente dazu, den Zustand und die Leistungsfähigkeit des Aufzeichnungsträgers zu beurteilen.

Zur Illustration sei die Meßmethode anhand eines Aufzeichnungsträgers mit einer Schichtenfolge AlN(100)/$GeSb_2Te_4$ (100)/AlN(100) beschrieben. Bei der Erhöhung der Pulsdauer stieg für 8-mW-Pulse das Reflexionsvermögen bei Pulsdauern oberhalb von 30 ns steil an. Ursache für diese Änderung war die zunehmende Kristallisation der Schichten. Bei 5-mW-Pulsen setzte eine Kristallisation wegen der geringeren Leistung später ein, nämlich bei Pulsdauern von etwa 60 ns. Wurde die Laserpulsdauer systematisch weiter erhöht, so fiel das Reflexionsvermögen ab einer Schwelle wieder steil ab. Diese Schwelle lag genau dort, wo bei fester Laserleistung die Lochbildung einsetzt. Für die Funktionsfähigkeit von Phasenwechsel-Aufzeichnungsträgern muß diese sogenannte Ablationsschwelle bei möglichst langen Laserpulsdauern liegen, um hohe Zyklenanzahlen zu ermöglichen.

Es wurden nun drei Aufzeichnungsträger (A, B, C) mit dem Aufbau

$GeSb_2Te_4$ (100)/AlN(30)/Al(30)　　　(A)

$GeSb_2Te_4$ (100)/AlN(30)/Al(30)/(Cr(2)　　(B)

$GeSb_2Te_4$ (100)/AlN(30)/Al(30)/Cr(5)　　(C)

wie beschrieben hergestellt und mit Laserpulsen von 8 mW Leistung und unterschiedlichen Pulsdauern bestrahlt. Die erfindungsgemäßen Aufzeichnungsträger B und C wurden erst bei Pulsdauern von 100 $\mu$s zerstört, der Aufzeichnungsträger A nach Stand der Technik dagegen bei Pulsdauern von 32 $\mu$s. Die erfindungsgemäßen Aufzeichnungsträger weisen also eine wesentlich höhere Lebensdauer auf als die bisher bekannten.

**Patentansprüche**

1. Reversibler optischer Aufzeichnungsträger mit mindestens einem Substrat, mindestens einer Speicherschicht vom Phasenwechsel-Typ und mindestens einer metallischen Doppelschicht, dadurch gekennzeichnet, daß die metallische Doppelschicht aus einer der Speicherschicht zugewandten Reflexionsschicht und einer der Speicherschicht abgewandten Chromschicht besteht.

2. Optischer Aufzeichnungsträger nach Anspruch 1, dadurch gekennzeichnet, daß die Speicherschicht Te, Ge und Sb oder As enthält.

3. Optischer Aufzeichnungsträger nach Anspruch 1 oder 2, dadurch gekennzeichnet, daß die Speicherschicht bis zu 10 Gew.-% an mindestens einem der Elemente Selen, Schwefel und Chrom enthält.

4. Optischer Aufzeichnungsträger nach einem der Ansprüche 1 bis 3, dadurch gekennzeichnet, daß auf wenigstens einer Seite der Speicherschicht eine dielektrische Schicht aufgebracht ist.

5. Optischer Aufzeichnungsträger nach Anspruch 4, dadurch gekennzeichnet, daß die dielektrische Schicht aus einem Carbid, Oxid, Nitrid, Sulfid oder deren Mischungen besteht.

6. Optischer Aufzeichnungsträger nach einem der Ansprüche 1 bis 5, dadurch gekennzeichnet, daß als Reflexionsschicht eine Aluminiumschicht verwendet wird.

7. Optischer Aufzeichnungsträger nach Anspruch 6, dadurch gekennzeichnet, daß die Speicherschicht aus $GeSb_2Te_4$ besteht und zwischen der Speicherschicht und der Aluminiumschicht eine Aluminiumnitridschicht angeordnet ist.

8. Optischer Aufzeichnungsträger nach einem der Ansprüche 1 bis 7, dadurch gekennzeichnet, daß die Schichten durch Sputtern oder Aufdampfen gebildet werden.